# FASCICULE DE BREVET EUROPEEN

(11) **EP 0 961 545 B1**
(45) Date de publication et mention de la délivrance du brevet: **14.08.2002**
(21) Numéro de dépôt: 97912249.6
(22) Date de dépôt: 24.10.1997
(51) Int. Cl.: A01M 29/00

(54) **DISPOSITIF DE CONDUCTION DU COURANT POUR LA PROTECTION DES BATIMENTS CONTRE LES VOLATILES**
STROMLEITER ZUM SCHUTZEN VON GEBÄUDEN GEGEN VÖGEL
CURRENT CONDUCTING DEVICE FOR PROTECTING BUILDINGS AGAINST BIRDS

(30) Priorité: 25.10.1996 FR 9613213
(43) Date de publication de la demande: 08.12.1999
(73) Titulaire: Got-Bria, Nicolas, 31200 Toulouse (FR)
(72) Inventeur: Got-Bria, Nicolas, 31200 Toulouse (FR)
(74) Mandataire: Richebourg, Michel François
(86) Numéro de dépôt international: FR9701908
(87) Numéro de publication internationale: WO9818317

(56) Documents cités:
- EP-A- 0 328 866
- EP-A- 0 372 564
- EP-A- 0 450 258
- DE-A- 4 138 514
- FR-A- 2 684 271
- FR-A- 2 712 452

## Description

La présente invention a trait au domaine de la protection des bâtiments au moyen de l'électricité selon le préambule de la revendication 1 et notamment aux adaptations permettant une protection dans des meilleures conditions.

Il existe dans l'art antérieur plusieurs dispositifs de conduction de courant électrique de haut voltage et de faible ampérage qui sont posés sur les bâtiments pour assurer leur protection contre les volatiles et notamment contre les pigeons.
En effet, il a été constaté que les oiseaux et plus particulièrement les pigeons du fait de leur prolifération et de leur mode de vie, étaient la cause de la dégradation des bâtiments qu'il colonisaient ou de l'environnement immédiat desdits bâtiments. Cette dégradation se présente sous plusieurs formes dont les principales sont :
- des dépôts de fientes, de plumes et de coquilles d'oeufs sur les bâtiments et autour des bâtiments,
- le rongement des briques par lesdits volatiles,
- l'odeur pestilentielle,
- le bouchage des gouttières,
- etc....

Les communes concernées suite à ces dégradations multiples ont dû parfois se résoudre à organiser des "battues" de pigeons pour freiner leur prolifération.

Pour éviter une solution aussi extrême condamnée par des associations de défense des animaux, plusieurs dispositifs permettant plus ou moins d'éloigner les pigeons des bâtiments ont été imaginés et notamment les dispositifs de conduction de courant qui semblent être la solution la plus simple et la plus "humaine". Ces dispositifs d'éloignement sont apposables sur toutes parties d'un édifice telles que :
- Le faîtage, les corniches, les gouttières, les monuments statuaires ou autres perchoirs potentiels .
Ils sont une adaptation du dispositif classique existant pour éloigner des clôtures, les bêtes d'élevage et qui consiste en un conducteur souple de courant tenu par chaque poteau ou piquet de la clôture et connecté à un générateur.

Le demandeur s'est orienté vers ce dispositif et a mené des recherches afin de pallier aux inconvénients des dispositifs de conduction de courant existants.

Parmi ceux-ci, les brevets allemand n° 41 38 514 au nom de SUZEN THOMAS, européen n° 0 328 866 au nom de WALDHOFF JURGEN, français n° 2 684 271 au nom de MONESTIER Jacques et européen n° 0 450 258 au nom d'ETTORE GALLIANI qui, reprennent le même principe de base susmentionné mettant en oeuvre deux tiges conductrices enfilées dans les plots-supports, présentent plusieurs inconvénients dont les principaux sont les suivants.

L'absence ou une mauvaise liaison entre les différentes tiges notamment lorsque la surface du bâtiment présente une forme en verrue ou tout simplement lorsque les tiges conductrices doivent suivre une direction différente.

La quasi-impossibilité de réaliser dans de bonnes conditions la pose de telles tiges sur des surfaces courbes.

Le manque de flexibilité dans les connexions entre les tiges conductrices notamment lors d'une réparation.

Etc....

Il est également connu dans l'art antérieur un dispositif de conduction comportant une pluralité de plots-supports dans lesquels viennent s'enfiler les fils de courants. Ces fils de courants afin de constituer une barrière matérielle aux pigeons sont rigidifiés au moyen de ressorts assurant la liaison entre les différents fils de même phase. L'utilisation de conducteurs souples de courant bien que résolvant le manque de souplesse a pour désavantage une installation particulièrement difficile en ce que le fil souple doit passer par tous les trous des plots-supports. D'autre part, malgré la présence de ressorts de tension l'utilisation de conducteurs souples multiplie obligatoirement le nombre de plots supports du fait de la souplesse du fil ou même de la tension du fil réalisée par les ressorts mais rabattant ledit fil vers un obstacle ou vers la surface sur laquelle est posée ledit dispositif.

Ces recherches s'appuyant sur cet état de fait, ont abouti à la conception d'un dispositif original permettant la pose et la connexion des tiges conductrices classiques dans des conditions opérationnelles optimales tout en permettant une protection des bâtiments sur lesquels est posé ledit dispositif dans les meilleures conditions.

Le dispositif de protection des bâtiments contre les volatiles du type de celui constitué par les éléments suivants :
- plusieurs paires de tiges rigides conductrices de courant électrique, l'une conduisant une phase et l'autre la terre,
- des plots-supports ayant pour fonction de disposer sur la surface d'un bâtiment lesdites tiges en assurant un parallélisme et un écartement constants entre les deux tiges mais aussi entre les tiges et la surface sur laquelle sont posés lesdits plots,
- lesdits plots-supports étant aménagés de deux alésages dans lesquels viennent s'introduire lesdites paires de tiges conductrices de courant électrique.

Selon la caractéristique principale de l'invention, ce dispositif est remarquable en ce que les tiges conduisant la phase ainsi que les tiges conduisant la terre constituant les différentes paires de tiges rigides sont liées entre elles par des ressorts à boudin dont les premières et dernières spires viennent s'ajuster aux extrémités des tiges de même phase pour en assurer la connexion de telle façon qu'ils puissent se retirer ou se placer par simple manipulation manuelle.

Cette caractéristique a pour principal avantage de permettre, tout en assurant la conduction du courant, des changements de direction entre les différentes paires de tiges rigides. Ces changements de direction sont nécessaires lorsque les tiges rencontrent un obstacle comme une corniche ou lorsque la paire de tiges rencontre la limite de la surface à protéger et doit partir dans une autre direction. De plus, du fait que cette liaison est élastique, la raideur de celle-ci facilite la pose des plots-supports en maintenant la linéarité entre chaque tige.

En outre, particulièrement adaptés pour ce type d'application, les ressorts assurent de par leur raideur, une rigidité dans l'assemblage des tiges entre elles. Ce type de ressorts s'enfile très facilement par rotation, sur les extrémités des tiges rigides conductrices en utilisant l'hélicoïde formée par les spires desdits ressorts pouvant être utilisée de la même façon pour dégager lesdits ressorts. Cette liaison montable / démontable a pour autre avantage de faciliter l'isolement d'une partie du dispositif de protection en effectuant une rupture volontaire de ligne par enlèvement du ressort conducteur pour pratiquer un contrôle ou un démontage de supports.

Cette caractéristique constitue donc une nouvelle utilisation d'un ressort. En effet, contrairement aux ressorts utilisés pour le dispositif décrit et représenté en art antérieur, ces derniers n'ont pas pour fonction de tendre les conducteurs puisque ces derniers sont rigides, mais de permettre de maintenir le contact électrique sans soudures tout en autorisant un changement de direction. En outre, l'ajustement de la tige à l'intérieur du ressort et la raideur dudit ressort permet de maintenir une certaine raideur dans le montage ce qui facilite l'installation du dispositif de l'invention.

Selon une caractéristique particulièrement judicieuse de l'invention, les plots supports sont couplés deux-à-deux au moyen d'un module de liaison de façon à ce que les quatre tiges soient parallèles. Ainsi, une plus grande largeur de bâtiment peut être protégée sans avoir à reposer à nouveau une nouvelle paire de tiges indépendante de la première paire.

Les concepts fondamentaux de l'invention venant d'être exposés dans leur forme la plus élémentaire, d'autres détails et caractéristiques ressortiront plus clairement à la lecture de la description qui suit donnant à titre d'exemple non limitatif et en regard des dessins annexés, un mode de réalisation d'un dispositif de conduction du courant pour la protection des bâtiments contre les volatiles conforme à l'invention. Cette description se réfère aux dessins annexés sur lesquels :
La figure 1 est une vue de côté d'un plot-support de l'invention faisant apparaître les alésages ménagés à l'intérieur.
La figure 2 est une vue de dessus du dispositif de conduction de courant avec les plots supports couplés deux à deux,
La figure 3 est une vue en perspective illustrant un exemple particulier d'utilisation des plots-supports couplés deux à deux,
La figure 4 est une vue en perspective illustrant les dispositions particulières d'utilisation du dispositif de protection au dessus d'une gouttière.

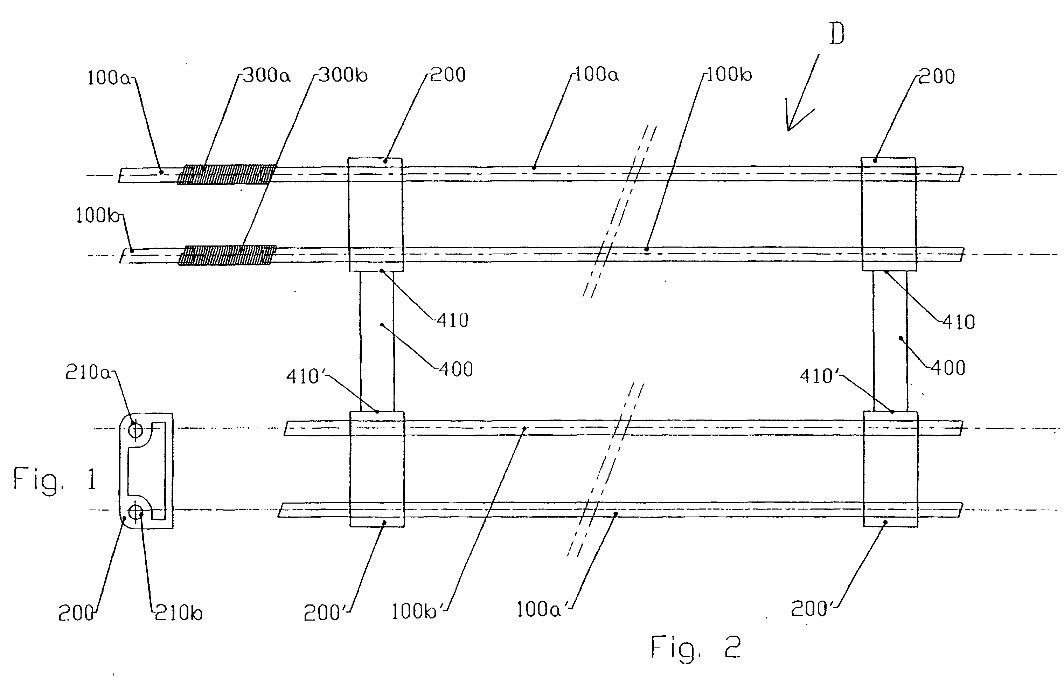

Comme illustré sur le dessin de la figure 2, le dispositif de protection référencé dans son ensemble D est du type de celui constitué par plusieurs paires de tiges rigides conductrices de courant électrique 100a et 100b, l'une conduisant une phase et l'autre la terre, lesdites paires étant disposées sur la surface du bâtiment au moyen de plots-supports 200 ménagés de deux alésages 210a et 210b dans lesquels s'enfilent, avant la pose dudit dispositif, lesdites paires de tiges 100a et 100b conductrices de courant électrique, lesdits plots-supports 200 assurant un parallélisme et un écartement constants entre les deux tiges 100a et 100b d'une part, mais aussi entre les tiges 100a et 100b et la surface sur laquelle sont posés lesdits plots-supports 200 d'autre part. Classiquement, lesdits plots-supports 200 sont collés sur la surface sur laquelle est posé ledit dispositif D mais peuvent être aussi vissés dans une ou plusieurs chevilles calées après perçage.

Selon la caractéristique principale de l'invention, les tiges 100a conduisant la phase ainsi que les tiges 100b conduisant la terre constituant les différentes paires de tiges rigides sont liées entre elles par une liaison du type élastique. Cette liaison élastique est, selon un choix technologique particulièrement judicieux du demandeur, assurée par des ressorts à boudin 300a et 300b dont les premières et dernières spires viennent s'ajuster aux extrémités des tiges de même phase 100a et 100b pour assurer la connexion. Ces ressorts à boudin sont ajustés de telle façon que lesdits ressorts 300a et 300b puissent se retirer ou se placer par simple manipulation manuelle. Ainsi, sans outillage spécifique ou classique les connexions pourront être réalisées ou coupées dans le dispositif de conduction de l'invention. Les caractéristiques mécaniques d'un ressort et notamment sa raideur permettent de garder rigide une liaison linéaire entre deux paires de tiges conductrices 100a et 100b, tout en autorisant tous les changements possibles de direction. Cette rigidité facilite grandement la pose du dispositif D et sa préparation en proposant des tiges conductrices de longueur standard du fait que la liaison élastique autorise l'assemblage de plusieurs paires entre elles sans que la flèche de la longueur totale de tiges conductrices enfilées n'empêche l'installation.

Tels qu'illustrés sur le dessin de la figure 2, lesdits plots-supports 200 et 200' sont couplés deux-à-deux, au moyen d'un module de liaison rigide 400 de façon à ce que les quatre tiges 100a, 100a', 100b, 100b' soient parallèles. Ce module de liaison permet de faciliter l'installation du dispositif lorsque la surface protégée est agrandie. En effet, les plots-supports 200 et 200' se trouvent grâce à ce module de liaison rigide 400 en vis à vis.

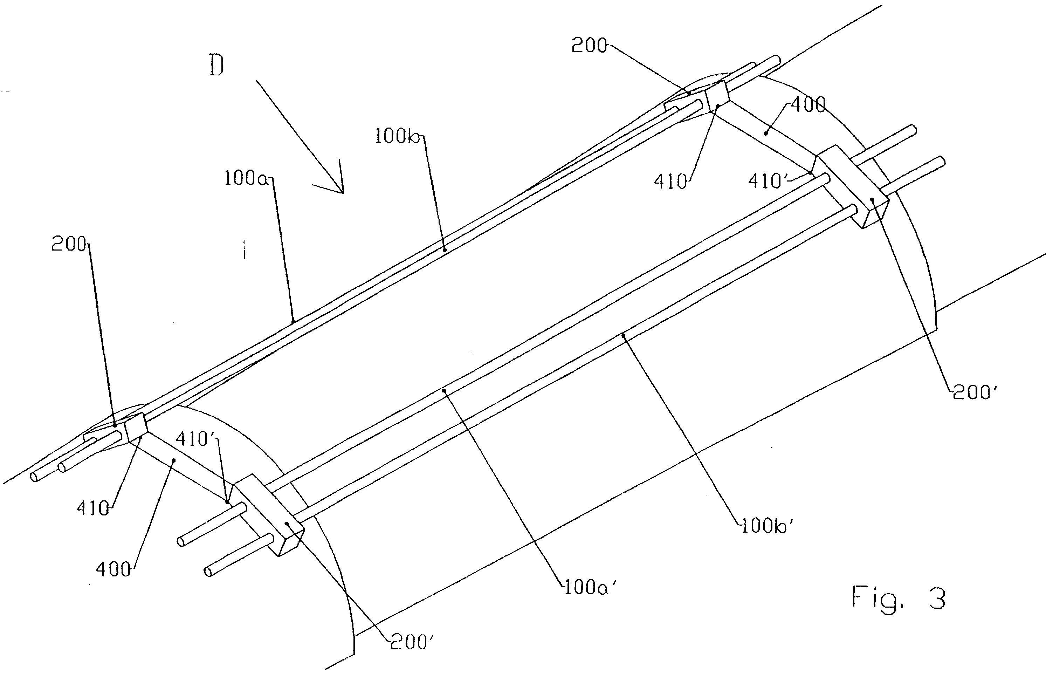

Dans des cas particuliers de pose, tel que celui illustré par le dessin de la figure 3 c'est à dire la pose sur un profil non plan, le couplage des plots-supports deux-à-deux apporte une facilité supplémentaire. Selon un mode de réalisation préférée de l'invention, les deux extrémités 410 et 410' du module de liaison 400, sont liées de façon flexible aux côtés en vis-à-vis des plots-supports 200 et 200'. Cette flexibilité permet, comme illustré sur le dessin de ladite figure, de proposer un dispositif de protection D rigide de chaque côté du faîtage et dont les plots-supports 200 et 200' adhèrent beaucoup mieux aux surfaces avec lesquelles ils sont en contact. Avantageusement, cette flexibilité dans les liaisons 410 et 410' entre le module de liaison rigide 400 et les plots-supports 200 et 200' leur permet de se trouver dans des plans différents que le plan horizontal sur lequel ils s'alignent lorsqu'ils sont posés sur une surface plane, mais n'autorise pas lesdits plots-supports 200 et 200' à se trouver dans des plans verticaux différents, ce qui permet de garder lesdits plots-supports toujours en vis-à-vis et donc de faciliter la pose du dispositif D.

En outre, selon une autre caractéristique particulièrement avantageuse de l'invention, les liaisons existantes entre les extrémités 410 et 410' du module de liaison 400 et lesdits deux plots-supports 200 et 200' couplés par ce dernier sont sécables. Cette caractéristique permet d'envisager un dispositif de protection D comportant des parties avec des plots supports 200 couplés deux à deux et des parties avec des plots-supports seuls selon la surface à protéger. De plus, cette caractéristique permet, en fabriquant d'une seule pièce les plots supports 200 en configuration couplés deux-à deux, de proposer les deux possibilités d'installation sans grande perte de matière (seul le module de liaison 400 serait jeté) ce qui diminue les coûts de fabrication et donc le coût total de l'installation d'un dispositif de protection D.

Selon une autre caractéristique particulièrement avantageuse de l'invention, la longueur du module de liaison 400 des plots-supports couplés 200 et 200' entre eux est légèrement supérieure à la longueur d'un plot-support (200 ou 200'). Cette caractéristique trouve son utilité notamment au point de vue de l'emballage et du stockage des plots-supports couplés deux-à-deux.

Une fois libéré du module de liaison 400, le plot-support 200 se présente tel que représenté sur le dessin de la figure 1, vu de côté. Ainsi, selon un mode de réalisation préféré mais non limitatif, les plots-supports 200 sont réalisés en plastique transparent traité anti-statique et anti ultra violet. La transparence est très utile puisque ce type de dispositif D est très souvent destiné à protéger des bâtiments historiques et la présence de parallélépipèdes couplée à celle des tiges rigides ne pourraient que nuire à l'esthétique générale. L'anti-statique et le traitement anti ultra violet sont des caractéristiques impératives pour une pièce en plastique devant être soumise aux facteurs d'environnement extérieurs tels que la pluie, la température, le soleil, etc....

Outre le fait que le choix d'un matériau plastique soit particulièrement judicieux pour la fabrication en série par moulage sous pression des plots supports couplés deux-à-deux et pour la flexibilité des liaisons se trouvant au niveau des extrémités 410 et 410' du module de liaison 400, il a aussi la capacité intrinsèque d'isoler une tige conductrice d'une autre. Avantageusement, lesdits plots-supports 200 comportent au niveau de leur face inférieure en contact avec la surface du bâtiment sur lequel il est posé, des stries permettant de mieux adhérer à ladite surface.

Selon un mode de réalisation préféré et adapté aux pigeons, les plots-supports 200 adoptent les dimensions suivantes :
- 40 mm de long,
- 15 mm de large,
- 15 mm de haut,
et l'entraxe des alésages 210b et 210a ménagés dans les plots-supports 200 dans lesquels s'enfilent lesdites tiges 100a et 100b est de 30 mm.

De plus, selon un autre mode de réalisation préférée de l'invention les tiges conductrices 100a et 100b adoptent un diamètre de 4 mm et sont réalisées en acier fortement allié. Ce diamètre permet de contribuer à la rigidité de l'ensemble et à limiter la flèche de la ligne conductrice.

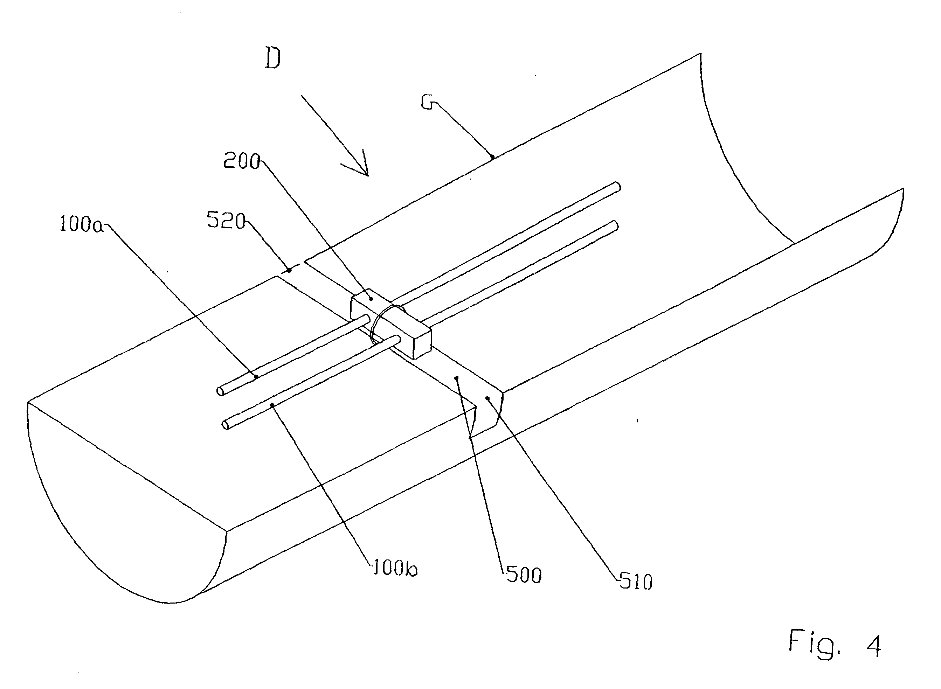

Un autre mode d'utilisation du dispositif D est illustré par le dessin de la figure 4, dans lequel, ledit plot-support 200 est associé à une platine de suspension déformable 500 assurant la suspension dudit plot-support au-dessus d'une gouttière G ou d'un profilé creux quelconque par déformation des extrémités 510 et 520 de ladite platine 500 qui viennent pincer les bords de ladite gouttière G. Ce mode d'utilisation particulier permet de protéger les gouttières, perchoirs souvent utilisés par les volatiles et notamment par les pigeons.

Selon un mode de réalisation préférée mais non limitatif de l'invention, la platine 500 est liée au plot-support 200 au moyen d'un anneau de serrage plastique.

On comprend que le dispositif de conduction du courant pour la protection des bâtiments contre les volatiles qui vient d'être ci-dessus décrit et représenté, l'a été en vue d'une divulgation plutôt que d'une limitation.

## Revendications

1. Dispositif (D) de protection des bâtiments contre les volatiles du type de celui constitué par les éléments suivants :
- plusieurs paires de tiges (100a et 100b) rigides conductrices de courant électrique, l'une conduisant une phase et l'autre la terre,
- des plots-supports apte à disposer sur la surface d'un bâtiment lesdites tiges en assurant un parallélisme et un écartement constants entre les deux tiges (100a et 100b) mais aussi entre les tiges (100a et 100b) et la surface sur laquelle sont posés lesdits plots (200),
- lesdits plots-supports étant aménagés de deux alésages (210a et 210b) dans lesquels viennent s'introduire lesdites paires de tiges conductrices (100a et 100b) de courant électrique, **CARACTERISE PAR LE FAIT QUE** les tiges (100a) conduisant la phase ainsi que les tiges (100b) conduisant la terre constituant les différentes paires de tiges rigides (100a et 100b) sont liées entre elles par des ressorts à boudin (300a et 300b) dont les premières et dernières spires viennent s'ajuster aux extrémités des tiges (100a et 100b) de même phase pour en assurer la connexion de telle façon qu'ils puissent se retirer ou se placer par simple manipulation manuelle.

2. Dispositif (D) selon la revendication 1, **CARACTERISE PAR LE FAIT QUE** les plots-supports (200 et 200') sont couplés deux-à-deux au moyen d'un module de liaison rigide (400), de façon à ce que les quatre tiges (100a, 100b, 100a', 100b') soient parallèles.

3. Dispositif (D) selon les revendications 1 et 2, **CARACTERISE PAR LE FAIT QUE** les deux extrémités (410,410') du module de liaison rigide (400) en contact chacune avec un plot-support (200), sont liées de façon flexible aux côtés en vis-à-vis des plots-supports (200 et 200').

4. Dispositif (D) selon les revendications 1, 2 et 3 prises ensemble, **CARACTERISE PAR LE FAIT QUE** les liaisons existantes (410 et 410') entre le module de liaison rigide (400) et lesdits deux plots-supports (200 et 200') couplés par ce dernier (400) sont sécables.

5. Dispositif (D) selon les revendications 1, 2, 3 et 4 prises ensemble, **CARACTERISE PAR LE FAIT QUE** la longueur du module de liaison rigide (400) des plots-supports couplés deux-à-deux (200 et 200') entre eux est légèrement supérieure à la longueur d'un plot-support (200 ou 200').

6. Dispositif (D) selon quelconque des revendications 1 à 6, **CARACTERISE PAR LE FAIT QUE** ledit plot-support (200) est associé à une platine de suspension (500) déformable assurant la suspension dudit plot-support (200) au-dessus d'une gouttière (G) ou d'un profilé creux quelconque par déformation des extrémités (510 et 520) de ladite platine (500) qui viennent pincer les bords de ladite gouttière (G).

7. Dispositif (D) selon l'une des quelconque des revendications 1 à 6, **CARACTERISE PAR LE FAIT QUE** les plots-supports (200) sont réalisés en plastique transparent traité anti-statique et anti ultra violet.

8. Dispositif (D) selon l'une quelconque des revendications 1 à 7, **CARACTERISE PAR LE FAIT QUE** les plots-supports (200) adoptent les dimensions suivantes :
- 40 mm de long,
- 15 mm de large,
- 15 mm de haut,
et, l'entraxe des alésages (210b et 210a) ménagés dans les plots supports (200) dans lesquels s'enfilent lesdites tiges (100a et 100b) est de 30 mm.

## Patentansprüche

1. Vorrichtung (D) zum Schutz von Gebäuden gegen Geflügel, umfassend folgende Elemente:
- mehrere Paare von starren Stangen (100a und 100b), die elektrischen Strom leiten, wobei die eine eine Phase leitet und die andere die Erde,
- Steck- und Haltevorrichtungen, die geeignet sind, die Stangen auf der Oberfläche eines Gebäudes anzuordnen, wobei für Parallelität und einen konstanten Abstand zwischen den zwei Stangen (100a und 100b), aber auch zwischen den Stangen (100a und 100b) und der Oberfläche, auf der die Steckvorrichtungen (200) angebracht sind, gesorgt wird,
- wobei die genannten Steck- und Haltevorrichtungen mit zwei Bohrungen (210a und 210b) versehen sind, in die die Stangenpaare (100a und 100b), die elektrischen Strom leiten, eingeführt werden,
**dadurch gekennzeichnet, dass** die Stangen (100a), die die Phase leiten, und die Stangen (100b), die die Erde leiten, wobei diese die verschiedenen Paare von starren Stangen (100a und 100b) bilden, untereinander durch Schraubenfedern (300a und 300b) verbunden sind, deren erste und letzte Windungen auf die Enden der Stangen (100a und 100b) der gleichen Phase ausgerichtet sind, um deren Verbindung auf eine Weise zu sichern, dass sie durch einfache manuelle Manipulation zurückgezogen oder platziert werden können.

2. Vorrichtung (D) nach Anspruch 1, **dadurch gekennzeichnet, dass** die Steck- und Haltevorrichtungen (200 und 200') mittels eines starren Verbindungsmoduls (400) jeweils zu zweit auf eine Weise gekoppelt sind, dass die vier Stangen (100a, 100b, 100a', 100b') parallel sind.

3. Vorrichtung (D) nach den Ansprüchen 1 und 2, **dadurch gekennzeichnet, dass** die zwei Enden (410, 410') des starren Verbindungsmoduls (400), die jeweils mit einer Steck- und Haltevorrichtung (200) in Kontakt sind, auf flexible Weise mit den gegenüberliegenden Seiten der Steck- und Haltevorrichtungen (200 und 200') verbunden sind.

4. Vorrichtung (D) nach den Ansprüchen 1, 2 und 3 in ihrer Gesamtheit genommen, **dadurch gekennzeichnet, dass** die bestehenden Verbindungen (410 und 410') zwischen dem starren Verbindungsmodul (400) und den zwei Steck- und Haltevorrichtungen (200 und 200'), die durch das letztgenannte (400) gekoppelt werden, trennbar sind.

5. Vorrichtung (D) nach den Ansprüchen 1, 2, 3 und 4 in ihrer Gesamtheit genommen, **dadurch gekennzeichnet, dass** die Länge des starren Verbindungsmoduls (400) der Steckund Haltevorrichtungen, die jeweils zu zweit (200 und 200') miteinander gekoppelt sind, geringfügig größer ist als die Länge einer Steck- und Haltevorrichtung (200 oder 200').

6. Vorrichtung (D) nach einem der Ansprüche 1 bis 5, **dadurch gekennzeichnet, dass** die Steck- und Haltevorrichtung (200) mit einer verformbaren Aufhängeplatine (500) verbunden ist, die die Aufhängung der Steck- und Haltevorrichtung (200) über einer Dachrinne (G) oder einem beliebigen hohlen Profil sichert, und zwar durch Verformung der Enden (510 und 520) der Platine (500), die die Ränder der Dachrinne (G) umklammern.

7. Vorrichtung (D) nach einem der Ansprüche 1 bis 6, **dadurch gekennzeichnet, dass** die Steck- und Haltevorrichtungen (200) aus antistatisch und antiultraviolett behandeltem, durchsichtigem Kunststoff gebildet sind.

8. Vorrichtung (D) nach einem der Ansprüche 1 bis 7, **dadurch gekennzeichnet, dass** die Steck- und Haltevorrichtungen (200) folgende Abmessungen aufweisen:
- Länge 40 mm
- Breite 14 mm
- Höhe 15 mm
und der Mittenabstand der Bohrungen (210b und 210a), die in den Steck- und Haltevorrichtungen (200) gebildet sind, in die die Stangen (100a und 100b) eingesteckt werden, 30 mm beträgt.

## Claims

1. Building protection device (D) against fowls constituted by the following elements:
- several pair of rigid rods (100a and 100b) conducting electricity, one carrying a phase and the other one carrying the earth,
- support-step capable of arranging on the surface of a building said rods by ensuring a constant parallelism and spacing between the two rods (100a and 100b) but also between the rods (100a and 100b) and the surface on which said plots (200) are placed,
- said support-step being provided with two borings (210a and 210b) in which said pairs of rods (100a and 100b) conducting electricity are introduced, wherein the rods (100a) carrying the phase as well as the rods (100b) carrying the earth constituting the various pairs of rigid rods (100a and 100b) are linked together by means of steel springs (300a and 300b), the first and last coils of which are adjusted to the extremities of the rods (100a and 100b) of the same phase in order to ensure their connection, so that they can be pulled out or placed by means of a simple manual operation.

2. Device (D) according to claim 1, wherein the support-steps (200 and 200') are coupled by pair by means of a rigid linking module (400), so that the four rods (100a, 100b, 100a', 100b') are parallel.

3. Device (D) according to claims 1 and 2, wherein the two extremities (410, 410') of the rigid linking module (400) being each in contact with a support-step (200) are flexibly linked to the sides of the support-steps (200 and 200'), facing each other.

4. Device (D) according to claims 1, 2 and 3 taken together, wherein the existing links (410 and 410') between the rigid linking module (400) and said two support-steps (200 and 200') being coupled by the latter (400) are divisible.

5. Device (D) according to claims 1, 2, 3 and 4 taken together, wherein the length of the rigid linking module (400) of the support-steps (200 and 200') being coupled two by two with each other is slightly greater than the length of a support-step (200 or 200').

6. Device (D) according to any one of claims 1 to 6, wherein said support-step (200) is associated with a ductile suspension plate (500) providing for the suspension of said support-step (200) above a gutter (G) or any hollow profile by deformation of the extremities (510 and 520) of said plate (500) which are pinching the edges of said gutter (G).

7. Device (D) according to any one of claims 1 to 6, wherein the support-steps (200) are made of a transparent plastic material that has been treated anti-static and anti-ultraviolet.

8. Device (D) according to any one of claims 1 to 7, wherein the support-steps (200) are provided with the following dimensions:
- 40 mm in length,
- 15 mm in width,
- 15 mm in height,
and, the centre distance of axes of the borings (210b and 210a) provided in the support-steps (200) in which are inserted said rods (100a and 100b) is of 30 mm.
